# EUROPEAN PATENT SPECIFICATION

(11) **EP 2 418 009 B1**
(45) Date of publication and mention of the grant of the patent: **05.08.2015**
(21) Application number: 10724137.4
(22) Date of filing: 07.04.2010
(51) Int. Cl.: B01D 15/18, B01J 19/18

(54) **SIMULATED MOVING BED MEMBRANE REACTOR, NEW HYBRID SEPARATION PROCESS AND USES THEREOF**
MEMBRANREAKTOR MIT SIMULIERTEM FLIESSBETT, NEUES HYBRIDTRENNVERFAHREN UND VERWENDUNGEN DAVON
RÉACTEUR D'ADSORPTION À MEMBRANES AVEC LIT MOBILE SIMULÉ, NOUVEAU PROCÉDÉ HYBRIDE DE SÉPARATION ET UTILISATIONS RESPECTIVES

(30) Priority: 08.04.2009 PT 09104496
(43) Date of publication of application: 15.02.2012
(73) Proprietor: Universidade Do Porto, 4099-002 Porto (PT)
(72) Inventor: TENEDÓRIO MATOS DA SILVA, Viviana Manuela, P-4200-465 Porto (PT); MARQUES PEREIRA, Carla Sofia, P-4200-465 Porto (PT); RODRIGUES, Alírio Egídio, P-4200-465 Porto (PT)
(74) Representative: Ferreira, Maria Silvina
(86) International application number: PCT/IB2010/051510
(87) International publication number: WO 2010/116335

(56) References cited:
- US-B1- 6 476 239
- BECHTOLD M ET AL: "Integrated operation of continuous chromatography and biotransformations for the generic high yield production of fine chemicals" JOURNAL OF BIOTECHNOLOGY, ELSEVIER SCIENCE PUBLISHERS, AMSTERDAM, NL LNKD- DOI:10.1016/J.JBIOTEC.2006.01.019, vol. 124, no. 1, 25 June 2006 (2006-06-25) , pages 146-162, XP024956758 ISSN: 0168-1656 [retrieved on 2006-06-25]
- MAKART S ET AL: "Separation of amino acids by simulated moving bed under solvent constrained conditions for the integration of continuous chromatography and biotransformation" CHEMICAL ENGINEERING SCIENCE, OXFORD, GB LNKD- DOI:10.1016/J.CES.2008.07.019, vol. 63, no. 21, 1 November 2008 (2008-11-01), pages 5347-5355, XP025506891 ISSN: 0009-2509 [retrieved on 2008-07-25]
- PEREIRA C S M ET AL: "A novel process for the ethyl lactate synthesis in a simulated moving bed reactor (SMBR)" CHEMICAL ENGINEERING SCIENCE, OXFORD, GB LNKD- DOI:10.1016/J.CES.2009.04.003, vol. 64, no. 14, 15 July 2009 (2009-07-15) , pages 3301-3310, XP026157563 ISSN: 0009-2509 [retrieved on 2009-04-09]

## Description

### FIELD OF THE INVENTION

The present invention is a new hybrid technology, the simulated moving bed membrane reactor. The technology shown here integrates a reactor with two different separation techniques: i) chromatography (simulated moving bed - SMB); ii) selective permeable membrane (namely, pervaporation and permeation, among others) into a single device.

### SUMMARY OF THE INVENTION

The simulated moving bed reactor (SMBR) consists of a set of interconnected columns packed with a solid (or a mixture of a solid catalyst and an adsorbent) that catalyzes the reaction and separates the reaction products by selective adsorption of one of the products. The technology shown here integrates the SMBR with the membrane reactor by the use of selective permeable membranes incorporated into the columns of the SMBR, enhancing its global performance, since additionally to the products separation by selective adsorption there is, also, the selective membrane removal of one of the products.

The present invention allows the intensification of a process that involves equilibrium limited reactions where more than one product is formed and their simultaneous separation (by adsorption and membranes), leading to conversions higher than the equilibrium ones, until complete conversion. This process is, therefore, appropriate for application to the continuous production and at industrial scale of oxygenated compounds, as esters and acetals.

### BACKGROUND OF THE INVENTION

Reaction and separation in a chemical process are seen, traditionally, as separated steps. This paradigm is still the current thought in the chemical industry. However, the combination of these steps (reaction/separation) in a single device has gain a considerable interest in the investigation and in the chemical industry, mainly for equilibrium limited reactions, since the continuous removal of at least one reaction product shifts the equilibrium in order to increase conversion and reduce by-product formation.

The term multifunctional reactor is often used to embrace reactive separations technology, which main advantages are: reduction of energy requirements, decrease of solvents consumption, lower capital investments, higher yields in the formation of the product and improvement in the selectivity, in the case of competitive reactions. Typical examples of equilibrium limited reactions include:
Esterification: R'-COOH + HO-R = R'COOR + H₂O
Acetalization: R'-CHO + 2 HO-R = R'CH-(OR)₂ + H₂O
Ketalization: R'R"CO + 2 HO-R = R'R"C(OR)₂ + H₂O

In the state of the technique, the custom multifunctional reactors used for that type of reactions are: reactive distillations, membrane reactors and chromatographic reactors. Regarding to reactive distillation (RD) the best example is the methyl acetate production developed and patented by the company Eastman Kodak Company (Agreda and Partin, 1984). This technology allowed reducing five times the capital investment and the energy consumption when compared with the traditional process (reaction followed by separation by distillation). However, there are some disadvantages in the use of reactive distillation for systems that exhibit azeotropes formation and/or when the boiling points of the products are similar.

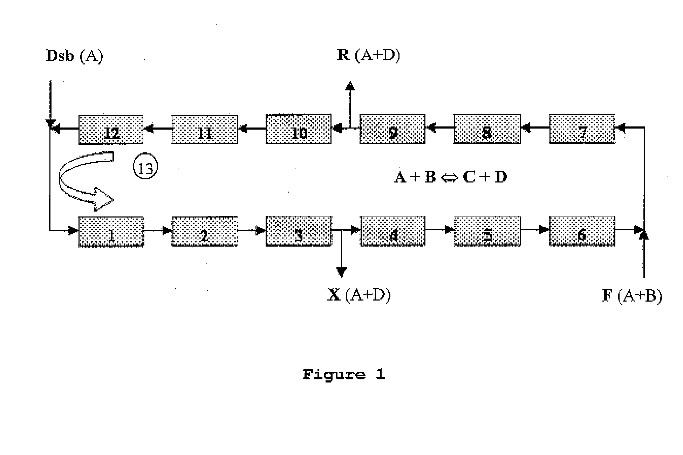

Membrane reactors are widely used in several chemical applications. Typical examples are the pervaporation and permeation reactors, where the catalyst is in a fixed (Zhu et al., 1996; Lafarga and Varma, 2000) or fluidized bed (Alonso et al., 2001; Lee et al., 2006). Several times, processes where the reactor and membrane are housed in separate units in series or parallel are also regarded as membrane reactors (Datta and Tsai, 1998; Tsotsis et al., 2007). Chromatographic reactors include fixed bed (FBR)(Silva and Rodrigues, 2002; Gyani and Mahajani, 2008), pressure swing adsorption (PSAR) (Harale et al., 2008) and simulated moving bed reactors (SMBR) (Kawase et al., 1996; Rodrigues and Silva, 2005; Silva and Rodrigues, 2005; Pereira et al., 2008). However, from all the mentioned chromatographic reactors, the most common for process intensification for the production of oxygenated products is the SMBR. The SMBR is well-known equipment (Broughton and Gerhold, 1961), that consists of a set of interconnected columns packed with an acid solid or a mixture of solids (catalysts and adsorbents). Typically, are introduced into the unit two inlet streams and are obtained two outlet streams, as shown in Figure 1. One of the inlet streams is the desorbent (Dsb) that is normally one of the reactants (A) and that is used to regenerate the solid (or mixture of solids) in the first zone. The reactants (A and B) are introduced in the feed stream (F). The products formed are removed from the reactor in two different streams, one comprising the less retained product and the desorbent (raffinate - R), and other stream comprising the most retained product and the desorbent (extract - X). All the inlet/outlet streams are fed/removed from the system through ports positioned between the columns; these ports are periodically shifted in the direction of the liquid flow in order to simulate the counter-current motion between the solid(s) and the liquid. The reactor is equipped with a plurality of inlet and outlet ports, and a rotary valve or a plurality of valves arranged in manner such that any feed stream may be introduced to any column and any outlet or effluent stream may be withdrawn from any column. The position of the inlet/outlet streams defines the different zones existing in the SMBR system, each one accomplishing a certain function and containing a variable number of columns. In Figure 1, the zone I is comprised between the desorbent stream port (Dsb) and the extract stream port (X); the zone II is comprised between the extract stream port (X) and the feed stream port (F); the zone III is comprised between the feed stream port (F) and the raffinate stream port (R); and the zone IV is comprised between the raffinate stream port (R) and the recycle stream port (Rec). The reactants (A and B) introduced in the feed stream (F) are converted within zones II and III. In these zones, the separation of the products formed (C and D) is carried out; the less retained product (C) is removed from the raffinate port and the most retained one (D) is removed from the extract port. As the products are removed from the reaction zone as they are formed, the equilibrium is shifted towards products formation. As these products are continuously removed, the reaction proceeds till the complete consumption of the limiting reactant (B), achieving conversion values above the thermodynamic equilibrium, being possible to achieve complete conversion (100 %). In the zone I, the regeneration of the solid saturated with product D is performed using a desorbent (reactant A) and in zone IV the desorbent is regenerated since it can contain some product C. The successful design of SMBR involves the right choice of the operation conditions, mainly the switching time period and flow rates in each zone of the unit. The appropriate choice of those parameters will ensure the regeneration of acid solid (or mixture of solids) containing adsorbed water, in zone I; the regeneration of the desorbent contaminated with the less retained product in zone IV; and the complete conversion of reactants and the separation of the formed products in zones II and III. The flowrates for each zone are given by the following expressions: *Q_{I}* = *Q_{Rec}* + *Q_{Dsb}; Q_{II}* = *Q_{I}* - *Q_{X}*; *Q_{III}* = *Q_{II}* + *Q_{F}*; *Q_{IV}* = *Q_{III}* - *Q_{R}* = *Q_{Rec}*. The switching time, t*, is the time necessary to shift all ports from a position P' to a position P. This process of shifting the ports could be made synchronously or asynchronously.

The SMBR has several advantages, as the ones already mentioned for the reactive separations; however, it has also some disadvantages, as for example, the difficulty in removing the more adsorbed species, which implies high desorbent consumption. Besides, in several applications, the feed is a mixture of reactants with one of the products (as for example, in esterifications where the carboxylic acids are aqueous solutions of the acid, being that water is a by-product obtained in the esterification reaction), which will influence the performance of the unit resulting in low reactants conversion and products purity, low unit productivity and high eluent/desorbent consumption, mainly when the product in the feed is the more retained one. In order to overcome these issues, it is the aim of the present invention to provide a novel technology to perform, simultaneously, reaction and separation into a single device, minimizing the desorbent consumption, increasing the productivity, the reactants conversion and the products purity.

The document from Matthias Bechtold et al. with the title "Integrated operation of continuous chromatography and biotransformations for the generic high yield production of fine chemicals" disclose the coupling of enzyme reactor and continuous chromatography as a very suitable and potentially generic process concept to address the thermodynamic limitations of a host of promising biotransformations. With this document Bechtold et al. thinks that should be possible to establish novel in situ product recovery processes of unprecedented efficiency and selectivity that represent a feasible way to recruit novel biocatalysts to the industrial portfolio. However, the technical solution here presented on this application discloses a simulated moving bed membrane reactor consisting of a set of interconnected columns packed with a solid and permeable membranes incorporated within the columns ending on the integration into a single equipment of the simulated moving bed reactor without necessarily coupling the enzyme reactor and continuous chromatography.
The document from Stefan Makart et al. with the title "Separation of amino acids by simulated moving bed under solvent constrained conditions for the integration of continuous chromatography and biotransformation" disclose the integration of continuous chromatography and enzymatic reactions allowing a new situ or online product recovery process to achieve high reaction productivity and yield and make biocatalysts economically more attractive. However, the technical solution here presented on this application discloses a simulated moving bed membrane reactor consisting of a set of interconnected columns packed with a solid and permeable membranes incorporated within the columns ending on the integration into a single equipment of the simulated moving bed reactor allowing the reaction and simultaneous separation by two different techniques: adsorption and selective membranes. Stefan Makart et al. do not use membranes in the process described, the separation is only accomplished by adsorption.

### BRIEF DESCRIPTION OF THE FIGURES

Figure 1. SMBR unit, where a reaction of type *A*+*B*↔*C*+*D* is considered and where the product D is the most adsorbed and C is the less adsorbed one, in which Dsb is the desorbent, R is the raffinate, X is the extract, F is the feed and (13) is the liquid direction and ports shift.

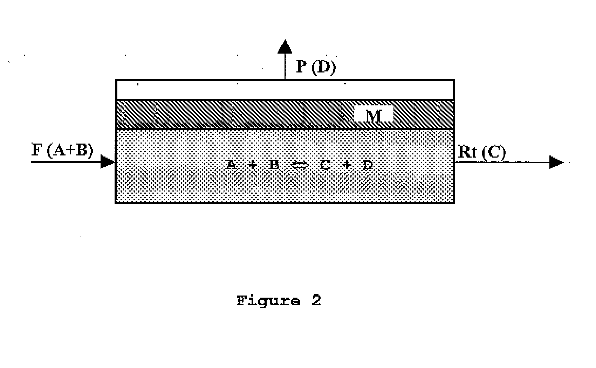

Figure 2. Membrane reactor where a reaction of type *A*+*B*↔*C*+*D* is considered and where the membrane is selective to product D, in which P is the permeate, F is the feed, Rt is the retentate and M is the membrane.

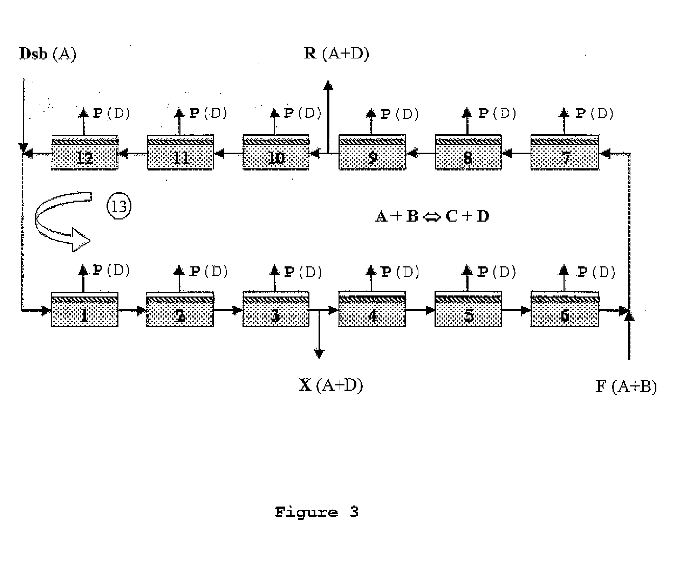

Figure 3. PermSMBR unit used to produce a product C, from a mixture of reactants, A and B, and a by-product D removed by adsorption, as well as, by selective permeable membranes, in which Dsb is the desorbent, R is the raffinate, X is the extract, F is the feed and (13) is the liquid direction and ports shift.
Figure 4. PermSMBR unit with 4 zones: two inlet ports for the feed and the desorbent stream; and two outlet ports for the raffinate and extract streams, in which Dsb is the desorbent, R is the raffinate, X is the extract, F is the feed, P is the permeate and Rec is the recycle stream.
Figure 5. PermSMBR unit with 3 zones: two inlet ports for the feed and the desorbent streams; and one outlet port for the raffinate stream, in which Dsb is the desorbent, R is the raffinate, F is the feed, P is the permeate and Rec is the recycle stream.
Figure 6. PermSMBR unit with 3 zones: two inlet ports for the feed and the desorbent streams; and one outlet port for the extract stream, in which Dsb is the desorbent, X is the extract, F is the feed, P is the permeate and Rec is the recycle stream.
Figure 7. PermSMBR unit with 5 zones: three inlet ports for two feed streams and one desorbent stream; and two outlet ports for the raffinate and extract streams, in which Dsb is the desorbent, R is the raffinate, X is the extract, F1 and F2 are the feed streams, P is the permeate and Rec is the recycle stream.
Figure 8. PermSMBR unit with 6 zones: three inlet ports for two feed streams and one desorbent stream; and three outlet ports for two raffinate streams and one extract stream, in which Dsb is the desorbent, R1 and R2 are the raffinate streams, X is the extract, F1 and F2 are the feed streams, P is the permeate and Rec is the recycle stream.
Figure 9. Bypass to perform the regeneration/activation step of the catalyst/adsorbent and/ or of the membranes in zone I of the PermSMBR unit, in which Dsb is the desorbent, Rg is the regeneration step, X is the extract and P is the permeate.
Figure 10. Internal concentration profiles at the middle of the switching time at cyclic steady state for the ethyl lactate production in a PermSMBR unit.
Figure 11. Internal concentration profiles at the middle of the switching time at cyclic steady state for the 1,1-dietoxiethane production in a PermSMBR unit.

### GENERAL DESCRIPTION OF THE INVENTION

In the present invention, a new hybrid technology is proposed, the simulated moving bed membrane reactor (PermSMBR), which integrates in a single equipment one reaction step with two different separation techniques: chromatography (SMB) and selective permeable membrane (pervaporation or permeation). The PermSMBR technology is particularly suitable for the intensification of processes that involve an equilibrium reaction and where more than one product is formed and where the feed is also comprised by one of the products, since they are removed from the reaction zone by adsorption and membranes processes, leading to higher conversions than the equilibrium ones, till almost complete conversion.

This process is, therefore, appropriate for application to the continuous production at industrial scale of oxygenated compounds, as esters and acetals, since besides increasing the productivity (by increasing the conversion), increases also the purity and leads to a significant reduction of the desorbent consumption.

In this invention, the SMBR unit is integrated with the membrane reactor using selective permeable membranes inside the columns of the SMBR, called the simulated moving bed membrane reactor (PermSMBR). The columns are packed with a solid, that should be simultaneously catalyst and selective adsorbent, could be acidic ion exchange resins, zeolites (Y, mordenites, ZSM, ferrierites), alumina silicates (mortmorillonites and bentonites) or hydrotalcites. Examples of acid resins are: Dowex 50 (Dow Chemical), Amberlite IR 120, Amberlyst A15 and A36 (Rohm & Haas), Lewatit (Bayer). Alternatively, it is possible to use a mixture of acid solids as catalyst and as selective adsorbent. The membranes must be selective to one of the products and can be classified regarding to the material (polymeric, ceramics, glass, metals and liquids), to the structure (symmetric, asymmetric, microporous, homogeneous) and to the process (microfiltration, ultrafiltration, nanofiltration, inverse osmosis, electrodyalisis, vapour permeation and pervaporation). For application in reactions for the synthesis of organic products will be particularly interesting:
- the pervaporation membranes:
   - zeolite type A, T or Y membranes (Mitsui Engineering & Shipbuilding ltd., Japan);
   - hydrophilic membranes, as for example, the Pervap 1000 (Sulzer Chemtech, German);
   - PVA membranes, as for example, the Pervap 2201 and 2216 (Sulzer Chemtech, German) and the GFT-1005 (Deutsche Carbone AG);
   - silica membranes, commercialized as Pervap SMS (Sulzer chemtech) or supplied by the Pervatech company (The Netherlands).
- the vapour permeation membranes - zeolite type A or T membranes, and carbon molecular sieves (CMS).

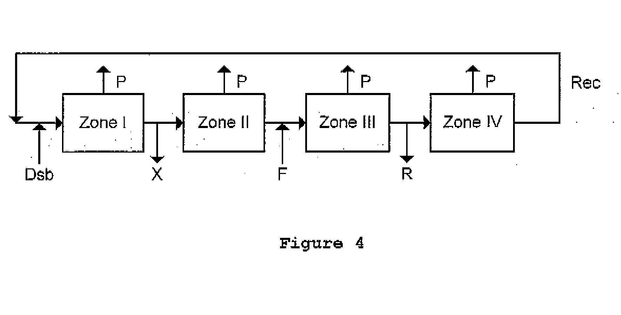

Typically, in the permSMBR unit are introduced two inlet streams and are obtained three outlet streams, dividing the reactor in 4 zones (Figure 4), similarly to the traditional SMBR (Figure 1). One of the inlet streams is the desorbent (Dsb) that is used to regenerate the solid saturated with the most adsorbed specie; and a feed that contains the reactants (F), and that can also contain the products. The products formed are removed from the reactor in three different streams, one rich in the less adsorbed product (raffinate - R), other rich in the most strongly adsorbed product (extract - X) and other that comprises, mainly, the product for which the membranes are selective, (total permeate - P), which combines all the permeate streams removed from each column. All the inlet/outlet streams, with exception of the permeate streams, are fed/removed from the system through ports positioned between the columns; these ports are periodically shifted (switching time, t*) in the direction of the liquid flow in order to simulate the counter-current motion between the solid(s) and the liquid. The shift of the ports can be made asynchronously. The reactor is equipped with a plurality of inlet and outlet ports, and a rotary valve or a plurality of valves arranged in manner such that any feed stream may be introduced to any column and any outlet or effluent stream may be withdrawn from any column; and it is also equipped with vacuum in order to remove the permeate of each column. This (vacuum) can be performed in all the columns or just on the selected ones. Similarly to the SMBR, the position of the inlet/outlet streams defines different zones existing in the PermSMBR unit, each one accomplishing a certain function and containing a variable number of columns. In Figure 4, the zone 1 is comprised between the desorbent (Dsb) and extract nodes (X), the zone 2 is comprised between the extract (X) and feed node (F); the zone 3 is comprised between the feed (F) and raffinate node (R), and the zone 4 is comprised between the raffinate (R) and desorbent node. In zone 1, the adsorbent is regenerated by desorption of the more strongly adsorbed product from the solid using a desorbent; in zones 2 and 3, reactive zones, the products are separated as they are being formed. These products are continuously removed from the unit by adsorption and also through the selective membranes and, therefore, the reaction will proceed beyond the thermodynamic equilibrium, being possible to obtain 100 % of reactants conversion. In zone IV, before being recycled to zone I, the desorbent is regenerated by adsorption of the less adsorbed product (C).

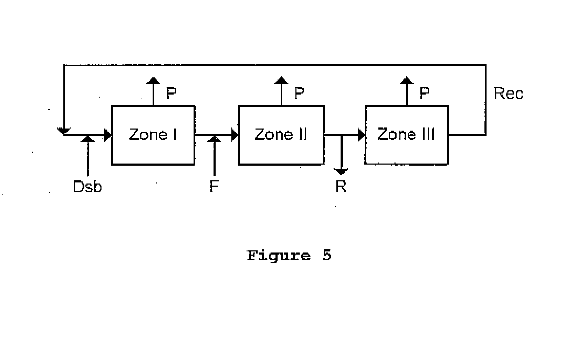

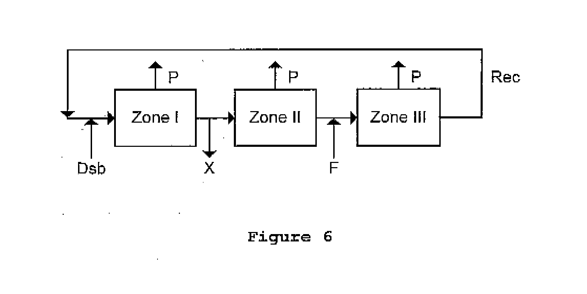

The PermSMBR can have different configurations depending on the number of streams fed/removed from the unit. The total number of streams, with exception of the permeate streams, corresponds to the total number of zones. For example, the PermSMBR unit can be simplified to a unit of three zones: eliminating the extract stream (X), when the membrane is selective to the more adsorbed product (Figure 5); or eliminating the raffinate stream (R), when the membrane is selective to the less retained product (Figure 6).

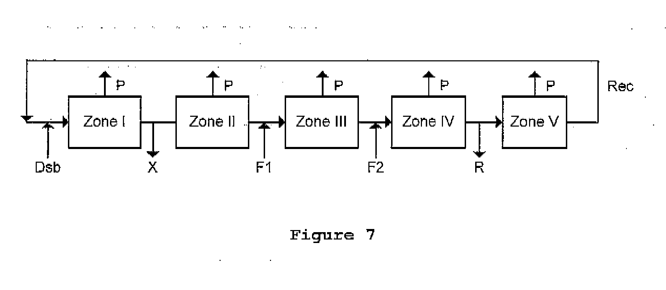

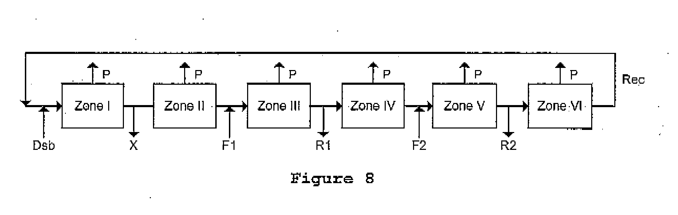

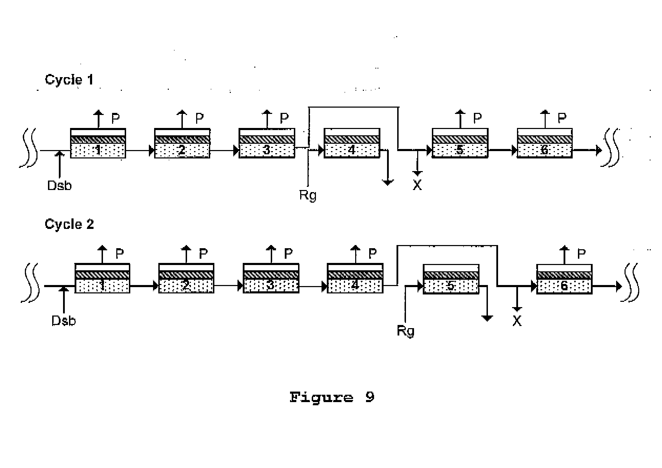

If necessary, the PermSMBR unit can also be more complex, having five or more zones. For example, the schematic diagram of the process represented in Figure 7 is similar to the one described for the Figure 4, but it has 5 zones since an additional feed stream (F₂) is introduced to the system. In this case, the regeneration of the solid and the desorbent is accomplished in zones 1 and 5, respectively; and the complete conversion of reactants and separation of the products formed occurs in zone 2, 3 and 4. The feed F2 can comprise the same reactants as the ones in feed F1 but in different proportions, or other reactants in order to obtain the desired product. In the case where 3 products are formed, it will be necessary to have other extra stream designed as R2 in Figure 8. Additionally, if it is observed a decrease in the PermSMBR unit performance (decrease of products purity, reduction of reactants conversion and/or loss of productivity, among others) due to problems related to deactivation/poisoning of the catalyst/adsorbent and/or of the membranes, the PermSMBR unit can be operated in order to correct those problems, making a bypass to each one of the columns during a cycle to perform the necessary treatments (treatments with acids, solvents, replacement of the solid and/or of the membrane, thermal treatments, ...). For example, if the desorbent is more expensive than the more adsorbed product, the treatment should be applied to the last column of zone I (Figure 9), since this column is still saturated with the most adsorbed product, avoiding the unnecessary consumption of desorbent if other column of the same zone was selected. This procedure can also be performed in other zones in the most appropriate column. Other ways of correction along time can be performed to the operational variables of the PermSMBR unit, similarly to the procedure described in literature for the SMB unit (Sá Gomes et al., 2007).

### DETAILED DESCRIPTION OF THE INVENTION

The present invention, the PermSMBR unit, can be applied in a variety of different types of reactions, mainly, in equilibrium limited reactions, as for example, esterifications, acetalizations, and Ketalizations. The examples below show the application of the PermSMBR unit for the ethyl lactate production through the esterification reaction between ethanol and lactic acid; and for the acetaldehyde diethylacetal (or 1,1-dietoxiethane) production from ethanol and acetaldehyde. Both reactions have water has a by-product, as can be seen in the reactions described above.

### EXAMPLES

### Example 1

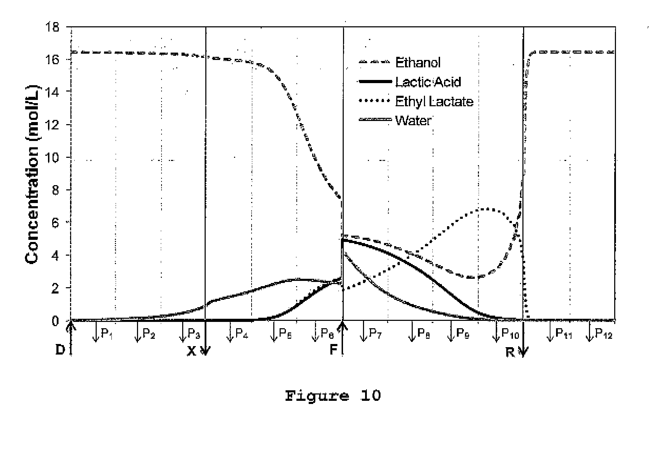

In this example, the PermSMBR unit is applied for the ethyl lactate (EL) production. The Ethyl lactate is a green solvent, biodegradable, non toxic and FDA approved. Its synthesis comprises a reversible reaction between ethanol and lactic acid having water as by-product. The equilibrium conversion of this reaction at 50°C and for an initial molar ratio between ethanol and lactic acid of 2 is about 66 %. The acidic ion exchange resin Amberlyst 15-wet (Rohm & Haas, France) was used as catalyst and selective adsorbent to water. The feed was a commercial lactic acid solution (85 %) in water (15 %) and the desorbent was ethanol p.a. (99.5 %).
The PermSMBR unit considered consisted in 12 columns packed with the Amberlyst 15-wet (average diameter of 342.5 µm), where each column had 13 commercial hydrophilic tubular membranes selective to water (Pervatech BV, The Netherlands) in order to dehydrate the reaction medium; the length, the porosity and the bulk density were of 23 cm, 0.424 and 390 kg/m³, respectively. The water and ethanol membrane permeabilities were of 1.3×10⁻¹ mol dm⁻² min⁻¹ bar⁻¹ and 6.0×10⁻⁴ mol dm⁻² min⁻¹ bar⁻¹, respectively (Sommer and Melin, 2005). The flowrates were *Q_{Dsb}* =58.0 *mL*/min; *Q_{Rec}* = 27.0 *mL*/min ; *Q_{F}* = 9.6 *mL*/min and *Q_{X}* = 37.0 *mL*/min. The switching time was set at 2.1 minutes and the adopted configuration was of 3 columns in zone I, 3 columns in zone II, 4 columns in zone III and 2 columns in zone IV. The internal concentration profiles at the middle of the switching time at cyclic steady state are shown in Figure 10. The lactic acid conversion obtained was of 99.34 % and it was observed the products separation: the ethyl lactate is removed in the raffinate stream (99.19 % purity, without desorbent) and the water is collected in the extract stream (99.98 % purity, without desorbent). Additionally, the water was also removed by the permeate streams in all twelve columns. The PermSMBR parameters were chosen in order to compare its performance to the one of the SMBR, since this technology will be the most competitive regarding to the PermSMBR. The same mass of catalyst and effective area was considered.
In order to show the PermSMBR unit enhancement when compared with the SMBR unit with the same mass of Amberlyst 15-wet it is presented, in Table 1, the results of a first optimization obtained for the ethyl lactate production in each one of the technologies. The switching time, desorbent and recycle flowrate were kept equal to 2.1 min, 58.0 mL/min and 27.0 mL/min, respectively; while the extract, raffinate and feed flowrates were changed in order to optimize the performance of each unit. As can be observed, the ethyl lactate synthesis in the PermSMBR unit is enhanced in about 42 % and the desorbent consumption is decreased in 25 %, which will reduce the costs associated to the desorbent recovery in the following separation steps.

**Table 1**

| | SMBR | PermSMBR | Improvement |
|---|---|---|---|
| EL Productivity (*KgL⁻¹day⁻¹*) | 18.06 | 25.68 | 42.22 % |
| Desorbent consumption (*Lkg⁻¹*) | 4.75 | 3.57 | 24.74 % |

### Example 2

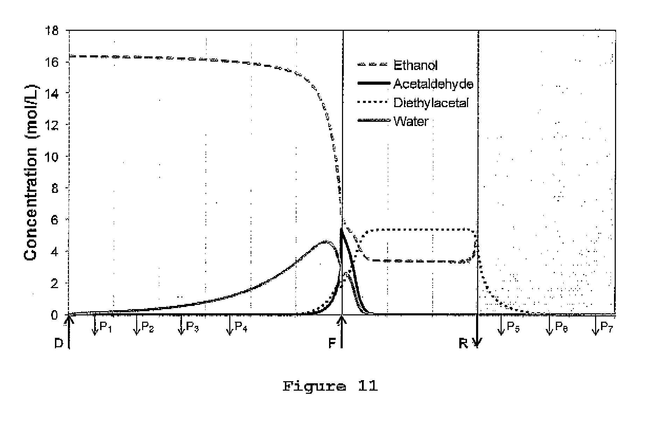

This example is related to the acetaldehyde diethylacetal (or 1,1-dietoxiethane) synthesis in the PermSMBR unit. This product can be used as green additive for fuel since it decreases the particles emissions. The diethylacetal is formed through the reversible reaction between acetaldehyde and ethanol having water as by-product (Rodrigues and Silva, 2005). For this reaction, at room temperature and for a 2.2 initial molar ration of ethanol/acetaldehyde, the equilibrium conversion is of 55 %. The acidic ion exchange resin Amberlyst 15-wet (Rohm & Haas, France) was used as catalyst and selective adsorbent to water. It were considered 12 columns packed with the Amberlyst 15-wet (average diameter of 342.5 µm), where each column had 13 commercial tubular membranes selective to water (Pervatech BV, The Netherlands); the length, the porosity and the bulk density were of 25.5 cm, 0.424 and 390 kg/M³, respectively. The water and ethanol membrane permeabilities were of 1.3×10⁻¹ mol dm⁻² min⁻¹ bar⁻¹ and 6.0×10⁻⁴ mol dm⁻² min⁻¹ bar⁻¹, respectively (Sommer and Melin, 2005); and, due to the similarity in terms of size and chemical composition between the acetaldehyde and ethanol, the permeance of this species was considered equal to the one of the ethanol. However, as the acetaldehyde has a high vapour pressure, the vacuum was not performed on the columns where the reaction occurs, in order to avoid the loss of this reactant. Additionally, since the membrane has a high selectivity and permeability to water, it was possible to eliminate the extract stream, removing the water only through the permeate streams.
The feed was a mixture of ethanol (30%) /acetaldehyde (70%) and the desorbent was ethanol (99.5%). The flowrates were Q_{Dsb}=19.0 ml/min; Q_{F}=10.0 ml/min; Q_{X}=0.0 ml/min and Q_{Rec}=19.0 ml/min. The switching time was set at 4.2 minutes and the configuration adopted was of 6 columns in zone I, 3 columns in zone II and 3 columns in zone III. The pervaporation step was activated just in the first 4 columns of zone I and in all the columns of zone III, since the acetaldehyde is very volatile, having high vapour pressure and, consequently, a high driving force for the membrane flux. The internal concentration profiles at the middle of the switching time after the cyclic steady state be achieved are shown in Figure 11. It was observed, that the acetaldehyde conversion was of 99.93 %, the diethylacetal was obtained in the raffinate stream with 99.78 % purity (without desorbent), the diethylacetal productivity was of 22.51 *KgL⁻¹day⁻¹* and the desorbent consumption was of 0.57 *Lkg*⁻*¹.* A SMBR unit to have the same purity and diethylacetal productivity as the PermSMBR, would have to operate in the following conditions: D_{Dsb}=35.0 mL/min; Q_{Rec}=19.0 mL/min; Q_{F}=10.0 mL/min and Q_{X}=16.0 mL/min and switching time of 3.8 minutes. It were considered 12 columns, with 2.6 cm of diameter, length of 23 cm and porosity of 0.4, which corresponds to the same mass of Amberlyst 15-wet used in the PermSMBR unit. The adopted configuration was of 3 columns per zone. As can be seen in Table 2, using the PermSMBR unit the desorbent consumption is reduced in 67 %, and, moreover, it is necessary to separate the ethanol just from one stream, the raffinate stream, reducing the energetic costs, as well as, the initial investment (one separation unit less).

**Table 2**

| | SMBR | PermSMBR | Improvement |
|---|---|---|---|
| Desorbent consumption (*Lkg⁻¹*) | 1.74 | 0.57 | 67.2 % |

### References

Agreda, V. H. and L. R. Partin. Reactive distillation process for the production of methyl acetate. No. 4435595 1984.
Alonso, M., M. J. Lorences, M. P. Pina and G. S. Patience. "Butane partial oxidation in an externally fluidized bed-membrane reactor." Catalysis Today 67(1-3): 151-157 (2001).
Broughton, D. B. and C. G. Gerhold. Continuous Sorption Process Employing Fixed Bed of Sorbent and Moving Inlets and Outlets. US Patent No. 2 985 5891961.
Datta, R. and S.-P. Tsai. Esterification of Fermentation-Derived Acids via Pervaporation. WO Patent No. 98235791998.
Gyani, V. C. and S. Mahajani. "Reactive chromatography for the synthesis of 2-ethylhexyl acetate." Separation Science and Technology 43(9-10): 2245-2268 (2008).
Harale, A., H. T. Hwang, P. K. T. Liu, M. Sahimi and T. T. Tsotsis ( 2008). Cyclic Hybrid Adsorbent-Membrane Reactor (HAMR) Studies for Hydrogen Production. AIChE Annual Meeting, Philadelphia, USA.
Kawase, M., T. B. Suzuki, K. Inoue, K. Yoshimoto and K. Hashimoto. "Increased esterification conversion by application of the simulated moving-bed reactor." Chemical Engineering Science 51(11): 2971-2976 (1996).
Lafarga, D. and A. Varma. "Ethylene epoxidation in a catalytic packed-bed membrane reactor: Effects of reactor configuration and 1,2-dichloroethane addition." Chemical Engineering Science 55(4) : 749-758 (2000).
Lee, W. N., I. J. Kang and C. H. Lee. "Factors affecting filtration characteristics in membrane-coupled moving bed biofilm reactor." Water Research 40(9): 1827-1835 (2006).
Pereira, C. S. M., P. S. Gomes, G. K. Gandi, V. M. T. M. Silva and A. E. Rodrigues. "Multifunctional Reactor for the Synthesis of Dimethylacetal." Ind. Eng. Chem. Res. 47(10): 3515-3524 (2008).
Rodrigues, A. E. and V. M. T. M. Silva. Industrial process for acetals production in a simulated moving bed reactor. Patent No. PT103123 (2004); WO2005/113476A1; US2008/0287714; EP17489742005.
Sá Gomes, P., M. Minceva and A. E. Rodrigues. "Operation strategies for simulated moving bed in the presence of adsorbent ageing." Separation Science and Technology 42(16): 3555-3591 (2007).
Silva, V. M. T. M. and A. E. Rodrigues. "Dynamics of a fixed-bed adsorptive reactor for synthesis of diethylacetal." AIChE J. 48(3): 625-634 (2002).
Silva, V. M. T. M. and A. E. Rodrigues. "Novel process for diethylacetal synthesis." AIChE Journal 51(10): 2752-2768 (2005).
Sommer, S. and T. Melin. "Performance evaluation of microporous inorganic membranes in the dehydration of industrial solvents." Chemical Engineering and Processing: Process Intensification 44(10): 1138-1156 (2005).
Tsotsis, T. T., M. Sahimi, B. Fayyaz-Najafi, A. Harale, B.-G. Park and P. K. T. Liu. Hybrid adsorptive membrane reactor. US Patent No. 2007053811 (A1) 2007.
Zhu, Y., R. G. Minet and T. T. Tsotsis. "A continuous pervaporation membrane reactor for the study of esterification reactions using a composite polymeric/ceramic membrane." Chemical Engineering Science 51(17): 4103-4113 (1996).

## Claims

1. Simulated moving bed membrane reactor, comprising a simulated moving bed reactor consisting of a set of interconnected columns packed with a solid and selective permeable membranes incorporated within the columns of said simulated moving bed reactor.

2. Reactor according to claim 1, comprising a finite number of zones connected in series by ports, into/from which inlet/outlet streams are introduced/removed.

3. Reactor according to the previous claims, comprising in each zone a finite number of columns connected in series, each column forming a membrane module packed with a solid or a mixture of solids, acting as a catalyst and selective adsorbent, on the retentate side, into which an inlet stream is introduced and from which a retentate stream is removed, the latter acting as feed into the subsequent module, and the other acting as a permeate stream, consisting of the formed products.

4. Reactor according to the previous claims, wherein the number of zones ranges from 1 to 8, according to the total number of inlet/outlet streams, with exception to the permeate stream, and each zone has a variable number of columns.

5. Reactor according to claim 4, wherein the number of zones ranges, preferably, from 3 to 6, and the number of columns per zone ranges, preferably, from 1 to 10.

6. Hybrid separation process using the reactor of any of claims 1 to 5, wherein reactants are converted into products in the presence of a solid, or a mixture of solids, acting as a catalyst and selective adsorbent while simultaneously the products formed are separated by membranes and adsorption processes.

7. Process according to claim 6, comprising the following steps:
a) introduction of the reactants by the inlet(s) stream(s) into the simulated moving bed membrane reactor;
b) reaction among the reactants so as to obtain the products;
c) removal of the most adsorbed product in the extract stream and/or in the permeate streams, the less adsorbed product(s) in the raffinate(s) stream(s) and/or in the permeate streams;
d) introduction of a desorbent for the regeneration of the solid or mixture of solids.

8. Process according to claims 6 and 7, wherein the permeate is removed from all columns, or just those selected.

9. Process according to claims 6 to 8, wherein the inlet/outlet streams periodically switch from one port to another, such period being designated switching time.

10. Process according to claim 9, wherein the position switch of inlet/outlet streams is carried out in a synchronous or asynchronous way.

11. Process according to claims 6 to 8, wherein the solid catalyst is selected from zeolites, alumina silicates, hydrotalcites or acidic ion exchange resins.

12. Process according to claims 7 to 8, wherein the adsorbent is selected from molecular sieves, zeolites, alumina, silicates, alumina silicates or acidic ion exchange resins.

13. Process according to claims 6 to 8, wherein the feed stream(s) comprise(s) a mixture of reactants and products.

14. Process according to claims 6 to 8, wherein the desorbent is selected from organic solvents, inorganic solvents, ionic liquids or supercritical solvents.

15. Process according to claim 14, wherein the desorbent is preferably selected from one of the reactants fed into the reactor.

16. Process according to claims 6 to 8, wherein the membranes are preferably of pervaporation or gaseous permeation.

17. Process according to claims 6 to 8, wherein the reactions are preferentially limited by thermodynamic equilibrium reactions and with a by-product formation.

18. Process according to claim 17, wherein the reactions are preferably esterification, acetylation, cetylation or transesterification.

19. Process according to claims 6 to 18, comprising a step of activation, regeneration or replacement of the catalyst, adsorbent and/or membranes.

20. Use of the reactor according to claims 1 to 5 in the continuous production of oxygenated compounds, such as esters and acetals.

## Patentansprüche

1. Simulated Moving Bed-Membranreaktor, umfassend einen Simulated Moving Bed-Reaktor bestehend aus einem Satz von mit Feststoff gefüllten miteinander verbundenen Säulen und in den Säulen des oben genannten Simulated Moving Bed-Reaktors integrierten selektiven permeablen Membranen.

2. Reaktor nach Anspruch 1, umfassend eine endliche Anzahl von in durch Ports, in denen/aus denen Einlass-/Ausslass-Ströme eingeführt/entnommen werden, in Reihe geschalteten Zonen.

3. Reaktor nach einem der vorherigen Ansprüche, umfassend eine endliche Anzahl von in Reihe geschalteten Säulen in jeder Zone, wobei jede Säule ein mit einem Feststoff oder mit einem Gemisch aus Feststoffen geffülltes Membranmodul bildet, das als Katalysator und selektives Adsorbens wirkt, auf der Seite des Retentats, in das ein Einlassstrom eingeführt wird und aus dem ein Retentatstrom entnommen wird, der letztere als Speisung in das nachfolgende Modul wirkt, und der andere als Permeatstrom wirkt, bestehend aus den gebildeten Produkten.

4. Reaktor nach einem der vorherigen Ansprüche, worin die Anzahl von Zonen im Bereich von 1 bis 8 liegt, entsprechend der Gesamtanzahl der Einlass-/Auslass-Ströme, mit Ausnahme von dem Permeatstrom, und worin jede Zone eine unterschiedliche Anzahl von Säulen aufweist.

5. Reaktor nach Anspruch 4, worin die Anzahl von Zonen bevorzugt im Bereich von 3 bis 6 liegt und die Anzahl von Säulen pro Zone bervorzugt im Bereich von 1 bis 10 liegt.

6. Hybrid-Trennverfahren unter Verwendung des in Ansprüchen 1 bis 5 genannten Reaktors, worin die Reaktanten in Produkte in Gegenwart eines Feststoffs oder einer Mischung von Feststoffen umgewandelt werden, als Katalysator und selektives Adsorbens wirken, während gleichzeitig die gebildeten Produkte durch Membranen und Adsorptionsverfahren getrennt werden.

7. Verfahren nach Anspruch 6, umfassend die folgenden Schritte:
a) Einführung der Reaktanten in den Simulated Moving Bed-Membranreaktor durch den/die Einlassström(e);
b) Reaktion zwischen den Reaktanten, um die Produkte zu erhalten;
c) Entnahme des am meisten adsorbierten Produkts in dem Extraktstrom und/oder in den Permeatströmen, des/der am wenigsten adsorbierten Produkts/Produkte in dem/in den Raffinatstrom/Raffinatströmen und/oder in den Permeatströmen;
d) Einführung eines Desorbens für die Regeneration des Feststoffs oder des Feststoffgemischs.

8. Verfahren nach Ansprüchen 6 und 7, worin das Permeat aus allen Säulen, oder nur aus den ausgewählten, entnommen wird.

9. Verfahren nach Ansprüchen 6 bis 8, worin die Einlass-/Auslass-Ströme periodisch von einem Port zu einem anderen geschaltet werden, worin diese Periode als Schaltzeit bezeichnet wird.

10. Verfahren nach Anspruch 9, worin die Positionsschaltung der Einlass-/Auslass-Ströme auf synchrone oder asynchrone Weise durchgeführt wird.

11. Verfahren nach Ansprüchen 6 bis 8, worin der feste Katalysator aus Zeolithen, Aluminiumsilikaten, Hydrotalciten oder sauren Ionenaustauscherharzen ausgewählt wird.

12. Verfahren nach Ansprüchen 7 bis 8, worin das Adsorbens aus Molekularsieben, Zeolithen, Aluminiumoxiden, Silikaten, Aluminiumsilikaten oder sauren Ionenaustauscherharzen ausgewählt wird.

13. Verfahren nach Ansprüchen 6 bis 8, worin der/die Zuführungsstrom(e) eine Mischung von Reaktanten und Produkten umfasst/umfassen.

14. Verfahren nach Ansprüchen 6 bis 8, worin das Desorbens aus organischen Lösemitteln, anorganischen Lösungsmitteln, ionischen Flüssigkeiten oder überkritischen Lösungsmitteln ausgewählt wird.

15. Verfahren nach Anspruch 14, worin das Desorbens bevorzugt aus einem der in den Reaktor eingespeisten Reaktanten ausgewählt wird.

16. Verfahren nach Ansprüchen 6 bis 8, worin die Membranen bevorzugt der Pervaporation oder der Gaspermeation sind.

17. Verfahren nach Ansprüchen 6 bis 8, worin die Reaktionen bevorzugt durch thermodynamische Gleichgewichtsreaktionen und mit einer Nebenproduktbildung begrenzt werden.

18. Verfahren nach Anspruch 17, worin die Reaktionen bevorzugt Veresterungen, Acetylierungen, Cetylierungen oder Umesterungen sind.

19. Verfahren nach Ansprüchen 6 bis 18, umfassend einen Schritt der Aktivierung, der Regeneration oder des Austauschs des Katalysators, Adsorbens und/oder Membranen.

20. Verwendung des Reaktors nach den vorherigen Ansprüchen 1 bis 5 bei der kontinuierlichen Herstellung von sauerstoffhaltigen Verbindungen, wie Ester und Acetale.

## Revendications

1. Réacteur à membranes à lit mobile simulé, comprenant un réacteur à lit mobile constitué par un ensemble de colonnes packées avec un solide interconnectées et membranes perméables sélectives incorporées à l'intérieur des colonnes dudit réacteur à lit mobile.

2. Réacteur selon la revendication 1, comprenant un nombre fini de zones connectées en série par des ports, dans lesquels/à partir desquels les courants d'entrée/de sortie sont introduits/enlevés.

3. Réacteur selon l'une quelconque des revendications précédentes, comprenant un nombre fini de colonnes connectées en série dans chaque zone, chaque colonne formant un module de membrane packée avec un solide ou un mélange de solides, agissant en tant que catalyseur et adsorbant sélectif, du côté rétentat, dans lequel est introduit un courant d'entrée et à partir duquel est enlevée un courant de rétentat, le dernier agissant en tant qu'alimentation introduite dans le module suivant et l'autre agissant en tant qu'un courant de perméat, constitué par les produits formés.

4. Réacteur selon l'une quelconque des revendications précédentes, dans lequel le nombre de zones va de 1 à 8, en fonction du nombre total de courants d'entrée/de sortie, à l'exception du courant de perméat, et dans lequel chaque zone comporte un nombre variable de colonnes.

5. Réacteur selon la revendication 4, dans lequel le nombre de zones préférablement va de 3 à 6, et le nombre de colonnes par zone préférablement va de 1 à 10.

6. Procédé de séparation hybride utilisant le réacteur mentionné dans les revendications de 1 à 5, dans lequel les réactifs sont convertis en produits en présence d'un solide, ou un mélange de solides, agissant en tant que catalyseur et adsorbant sélectif, et simultanéement les produits formés sont séparés par les membranes et les procédés d'adsorption.

7. Procédé selon la revendication 6, comprenant les étapes suivantes:
a) introduction des réactifs dans le réacteur à membranes à lit mobile simulé par le (s) courant (s) d'entrée;
b) réaction entre les réactifs de manière à obtenir les produits;
c) enlèvement du produit le plus adsorbé dans le courant d'extrait et/ou dans les courants de perméat, le(s) produit(s) le(s) moins adsorbé(s) dans le(s) courant(s) de raffinat et/ou dans les courants de perméat;
d) introduction d'un désorbant pour la régénération du solide ou du mélange de solides.

8. Procédé selon les revendications 6 et 7, dans lequel le perméat est enlevé de toutes les colonnes, ou seulement de celles sélectionnées.

9. Procédé selon les revendications 6 à 8, dans lequel les courants d'entrée/de sortie commutent périodiquement d'un port à un autre, cette période étant désignée de temps de commutation.

10. Procédé selon la revendication 9, dans lequel la commutation de position des courants d'entrée/de sortie est effectuée d'une manière synchrone ou asynchrone.

11. Procédé selon les revendications 6 à 8, dans lequel le catalyseur solide est choisi parmi les zéolites, les silicates d'alumine, des hydrotalcites ou des résines échangeuses d'ions acides.

12. Procédé selon les revendications 7 à 8, dans lequel l'adsorbant est choisi parmi les tamis moléculaires, les zéolites, l'alumine, les silicates, les silicates d'alumine ou les résines échangeuses d'ions acides.

13. Procédé selon les revendications 6 à 8, dans lequel le(s) courant(s) d'alimentation comprend/comprennent un mélange de réactifs et de produits.

14. Procédé selon les revendications 6 à 8, dans lequel le désorbant est choisi parmi les solvants organiques, les solvants inorganiques, les liquides ioniques ou les solvants supercritiques.

15. Procédé selon la revendication 14, dans lequel le désorbant préférablement est choisi parmi l'un des réactifs introduits dans le réacteur.

16. Procédé selon les revendications 6 à 8, dans lequel les membranes préférablement sont de pervaporation ou de perméation gazeuse.

17. Procédé selon les revendications 6 à 8, dans lequel les réactions préférablement sont limitées par des réactions d'équilibre thermodynamique et avec une formation de sous-produit.

18. Procédé selon la revendication 17, dans lequel les réactions préférablement sont une estérification, une acétylation, une cétylation ou une transestérification.

19. Procédé selon les revendications 6 à 18, comprenant une étape d'activation, de régénération ou de remplacement du catalyseur, adsorbant et/ou membranes.

20. Utilisation du réacteur selon l'une quelconque des revendications précédentes 1 à 5 dans la production en continu de composés oxygénés, tels que des esters et des acétals.
